# EUROPÄISCHE PATENTSCHRIFT

(11) **EP 3 769 408 B1**
(45) Veröffentlichungstag und Bekanntmachung des Hinweises auf die Patenterteilung: **13.08.2025**
(21) Anmeldenummer: 19723018.8
(22) Anmeldetag: 18.04.2019
(51) Int. Cl.: H02K 55/04, H02K 3/24

(54) **SUPRALEITENDE ELEKTRISCHE SPULENEINRICHTUNG SOWIE ROTOR MIT SPULENEINRICHTUNG**
SUPERCONDUCTIVE ELECTRIC COIL DEVICE AND ROTOR COMPRISING A COIL DEVICE
DISPOSITIF DE BOBINE ÉLECTRIQUE SUPRACONDUCTEUR ET ROTOR COMPRENANT UN DISPOSITIF DE BOBINE

(30) Priorität: 27.04.2018 DE 102018206564
(43) Veröffentlichungstag der Anmeldung: 27.01.2021
(73) Patentinhaber: Siemens Energy Global GmbH & Co. KG, 81739 München (DE)
(72) Erfinder: ARNDT, Tabea, 91056 Erlangen (DE)
(86) Internationale Anmeldenummer: PCT/EP2019/060082
(87) Internationale Veröffentlichungsnummer: WO 2019/206801

(56) Entgegenhaltungen:
- EP-A1- 3 292 554
- DE-A1- 102011 056 008
- DE-A1- 102014 114 451
- DE-A1- 19 958 727
- FR-A- 1 270 987
- JP-A- H08 130 134

## Beschreibung

Die vorliegende Erfindung betrifft eine elektrische Spuleneinrichtung, welche als Spuleneinrichtung für eine elektrische Maschine ausgebildet ist, mit einem Wicklungsträger und einer auf dem Wicklungsträger angebrachten Wicklung aus einem supraleitenden Leiter sowie einem Kühlmittelkanal zur Zirkulation eines fluiden Kühlmittels. Weiterhin betrifft die Erfindung einen Rotor für eine elektrische Maschine mit einer solchen Spuleneinrichtung.

Aus dem Stand der Technik sind supraleitende elektrische Spuleneinrichtungen bekannt, welche als Erregerwicklungen in Rotoren von elektrischen Maschinen eingesetzt werden. Um die Spuleneinrichtung beim Betrieb einer solchen Maschine auf eine kryogene Betriebstemperatur unterhalb der Sprungtemperatur des verwendeten Supraleiters zu kühlen, weist ein solcher Rotor häufig auch ein Kühlsystem auf. Ein solches Kühlsystem kann beispielsweise einen oder mehrere Kühlmittelkanäle umfassen, in denen ein fluides (also ein flüssiges beziehungsweise gasförmiges) Kühlmittel zirkuliert. Wichtig ist in solchen Fällen, dass eine gute thermische Anbindung der zu kühlenden Spuleneinrichtung an das fluide Kühlmittel vorliegt. Viele solche Rotoren weisen einen tragenden Rotorkern auf, auf dem eine oder mehrere supraleitende Spuleneinrichtungen gehalten werden. In vielen Fällen wird dieser Rotorkern ebenfalls auf die kryogene Betriebstemperatur gekühlt. Es handelt sich dann bei dem Rotor um einen im Wesentlichen vollständig gekühlten Rotor.

Alternativ ist es jedoch grundsätzlich auch möglich, dass der Rotorkern im Betrieb auf einem vergleichsweise warmen Temperaturniveau liegt und nur die direkte Umgebung der supraleitenden Spuleneinrichtung lokal gekühlt wird. Eine solche Variante ist beispielsweise in den US Patentschriften US9431864B2 und US8664809B2 näher beschrieben. Gemäß diesen beiden Schriften können die supraleitenden Erregerspulen mittels thermisch vergleichsweise schlecht leitender Halteschlaufen an einem vergleichsweise warmen weichmagnetischen Rotorkern befestigt sein. Auch hier sind im Bereich der supraleitenden Spulen Kühlmittelkanäle angeordnet, in denen ein fluides Kühlmittel fließen und so die Spulen auf eine kalte Betriebstemperatur kühlen kann. Ein Vorteil eines solchen warmen Rotorkerns ist, dass für die Verluste in diesem Bereich des Rotors kein zusätzlicher Kühlaufwand für das kryogene Kühlsystem anfällt. Allerdings muss eine gute thermische Isolation sowie eine zuverlässige Drehmomentübertragung für verschiedene Raumrichtungen zwischen dem warmen Rotorkern und den supraleitenden Spulen gewährleistet sein. Dies kann zu einem vergleichsweise hohen apparativen Aufwand bei der Halterung der einzelnen Spulen führen, beispielsweise zu der Notwendigkeit, Halteschlaufen für verschiedene Richtungen vorzusehen.

Aus der JP H08 130134 A ist eine supraleitende Spuleneinrichtung für einen Transformator bekannt, bei der auf ein von einem Kühlfluid durchströmten Hohlrohr in Ringform mehrere Supraleiter in Form einer Helix aufgebracht sind.

Aus der EP 3 292 554 A1 ist ein Transformator mit hochtemperatursupraleitenden Bandleiter-Wicklungen bekannt, die jeweils in mehreren Windungen um eine gemeinsame ringartige Grundstruktur gewickelt sind, bei dem die Wicklungen von einem umschließenden Kryostat gekühlt werden.

Aus der DE 10 2014 114451 A1 ist eine elektrische Maschine, die eine Spulenwicklung aus supraleitendem Material aufweist, bekannt, bei der ein Kühlrohr einer Kühleinrichtung, die geeignet ist supraleitendes Material bis unter die Sprungtemperatur abzukühlen, um die Spulenwicklung anliegend gewickelt ist.

Aus der DE 10 2011 056008 A1 ist eine elektrische Maschine, die eine Statorwicklung aus supraleitendem Material aufweist, bekannt, bei der die Statorwicklung innerhalb eines Kryostaten angeordnet ist.

Aus der FR 1 270 987 A ist eine elektrische Maschine bekannt, bei der ein Wicklungsleiter derart ausgestaltet ist, dass eine Vielzahl von heliciodal verdrillter Leitersegmente einen zentralen Kühlkanal formen.

Aus der DE 199 58 727 A1 ist eine supraleitende Spule bekannt, bei der auf ein von einem Kühlfluid durchströmten Hohlrohr ein keramischer Wärmeableiter, ein elektrischer Bypass und die Wicklung eines Supraleiters aufgebracht sind.

Die wesentlichen Anforderungen, die an eine supraleitende Spuleneinrichtung eines solchen Rotors und insbesondere auch an die Anbindung der Spuleneinrichtung an die übrigen Rotorkomponenten gestellt werden, liegen zum einen im Bereich der thermischen Isolation und der Kopplung der Spulen an ein Kühlsystem und zum anderen im Bereich der für den Betrieb des Rotors nötigen mechanischen Stabilität. Hierunter soll zum einen die mechanische Stabilität der Spulenaufhängung verstanden werden, die insbesondere bei hohen Drehzahlen und/oder hohen Maschinenleistungen starken Zentrifugalkräften und auch starken elektromagnetischen Kräften ausgesetzt ist. Zum anderen soll unter der mechanischen Stabilität der supraleitenden Spuleneinrichtung auch verstanden werden, dass der supraleitende Leiter selbst sowohl bei der Herstellung der Spule als auch beim Betrieb keine mechanische Schädigung erfährt. Hierzu gehört auch, dass die tolerierbaren Biegeradien des supraleitenden Leiters nicht unterschritten werden. Viele bekannte supraleitende Leiter und insbesondere die supraleitenden Bandleiter sind empfindlich gegenüber zu starker lokaler Biegung, vor allem gegenüber einer Biegung innerhalb der Bandleiterebene. Solche Randbedingungen müssen bei der Auslegung der Spulenwicklung ebenfalls berücksichtigt werden. Andererseits ist es aber bei vielen Anwendungen wünschenswert, eine möglichst kompakte Spulengeometrie und insbesondere möglichst kompakte Wicklungsköpfe zu erreichen. Unter den Wicklungsköpfen sollen hier allgemein diejenigen Spulenbereiche verstanden werden, bei denen axiale Spulensegmente (die entlang der Hauptachse der Maschine ausgerichtet sind) durch Verbindungssegmente miteinander elektrisch verbunden werden. Kompakte Wicklungsköpfe sind eine wesentliche Voraussetzung, um möglichst kleine und leichte Maschinen und insbesondere Maschinen mit einer hohen Leistungsdichte zur Verfügung stellen zu können. Vor allem bei Rennbahnspulen aus supraleitenden Bandleitern ist der Platzbedarf für die Wickelköpfe aufgrund der geringen Biegbarkeit der Bandleiter oft vergleichsweise hoch.

Aufgabe der Erfindung ist es daher, eine elektrische Spuleneinrichtung anzugeben, welche die genannten Nachteile überwindet. Insbesondere soll eine elektrische Spuleneinrichtung zur Verfügung gestellt werden, welche mechanisch stabil ist, bei welcher der Supraleiter zuverlässig auf eine kryogene Betriebstemperatur kühlbar ist und welche gleichzeitig einen geringen Platzbedarf im Bereich der Wickelköpfe aufweist. Eine weitere Aufgabe ist es, einen Rotor für eine elektrische Maschine mit den entsprechenden Eigenschaften zur Verfügung zu stellen.

Diese Aufgaben werden durch die in Anspruch 1 beschriebene elektrische Spuleneinrichtung und den in Anspruch 9 beschriebenen Rotor gelöst.

Die erfindungsgemäße elektrische Spuleneinrichtung weist einen Wicklungsträger auf, der aus einem länglichen Hohlrohr gebildet ist. Dieses Hohlrohr ist nach Art eines Rings geformt, so dass insgesamt durch die Ringform des Wicklungsträgers eine übergeordnete Schlaufe der Spuleneinrichtung gebildet wird. Weiterhin weist die Spuleneinrichtung eine auf dem Wicklungsträger angebrachte Wicklung aus einem supraleitenden Leiter auf. Der supraleitende Leiter ist in einer Vielzahl von Einzelwindungen helixartig um das Hohlrohr gewickelt, sodass sich durch die Ringform des Wicklungsträgers wenigstens eine übergeordnete Windung der gesamten Helix ergibt. Das Innere des Hohlrohrs ist dabei als Kühlmittelkanal zur Zirkulation eines fluiden Kühlmittels ausgebildet.

Mit anderen Worten liegt innerhalb der Spuleneinrichtung eine Verschachtelung von zwei Wicklungen vor: Eine erste, untergeordnete Wicklung ist durch die Vielzahl von Einzelwindungen des Leiters um den Wicklungsträger gegeben, wobei hier insgesamt eine helixartige Wicklung vorliegt. Eine zweite, übergeordnete Wicklung ist durch die Ringform des Wicklungsträgers vorgegeben, wodurch die auf dem Wicklungsträger aufgewickelter Helix als Ganzes in wenigstens einer Schlaufe - und somit wenigstens einer übergeordneten Windung - vorliegt. Insbesondere kann sich die Helixwicklung über einen wesentlichen Teil der Länge des ringförmig geformten Hohlrohrs und besonders vorteilhaft sogar über den ganzen Umfang des Rings erstrecken. Hierdurch wird erreicht, dass aus der (untergeordneten) Helixwicklung eine vollständige (übergeordnete) Windungsschlaufe des supraleitenden Leiters gebildet wird. Insgesamt ergibt sich dadurch ein Netto-Stromtransport entlang der lokalen Richtung des Hohlrohrs.

Prinzipiell und allgemein vorteilhaft kann der Wicklungsträger als geschlossener Ring vorliegen, so dass durch die Form des Wicklungsträgers also genau eine übergeordnete Schlaufe gebildet ist (und somit genau eine übergeordnete Windung). Alternativ ist es jedoch grundsätzlich auch möglich, dass der Wicklungsträger nicht vollständig geschlossen, sondern nur weitgehend ringartig geformt ist. Es kann also ein vergleichsweise kleiner offener Bereich des Wicklungsträgers vorliegen, welche optional durch ein separates Verbindungsstück geschlossen sein kann. Grundsätzlich ist es jedoch auch möglich, dass die übergeordnete Wicklung nicht nur eine einzige Windung umfasst, sondern eine Mehrzahl solcher Windungen. Hierzu können insbesondere auf einen ringförmig geschlossenen Wicklungsträger mehrere übereinanderliegende helixartige Wicklungen aufgebracht werden, so dass wiederum für den Leiter insgesamt mehrere übergeordnete Windungen (hier bestehend aus den einzelnen Lagen der Helix) gebildet werden.

Der Kühlmittelkanal im Inneren des Hohlrohrs kann insbesondere zur Zirkulation von flüssigem oder gasförmigem Kühlmittel innerhalb eines insgesamt geschlossenen Kühlmittelkreislaufs des Rotors ausgebildet sein. Hierzu kann der Kühlmittelkanal insbesondere seitliche (also nicht-tangentiale) Anschlüsse aufweisen, durch welche ein solches fluides Kühlmittel einbeziehungsweise ausgeleitet werden kann.

Ein wesentlicher Vorteil der erfindungsgemäßen Spuleneinrichtung liegt darin, dass der als Hohlrohr ausgebildete Wicklungsträger dem helixartig darauf aufgewickelten supraleitenden Leiter sowohl mechanische Stabilität verleiht als auch eine zuverlässige Kühlung ermöglicht. Im Gegensatz zu herkömmlichen Erregerspulen in supraleitenden Rotoren, bei denen die supraleitenden Spulen häufig als imprägnierte oder vergossene Flachspulen aus supraleitenden Bandleitern ausgebildet sind, muss die Spulenwicklung für sich hier nicht selbsttragend ausgebildet sein. Mit anderen Worten handelt es sich bei der Spulenwicklung nicht um ein eigenstabiles Bauteil, sondern die einzelnen Windungen der helixartige Wicklung werden mechanisch von dem Wicklungsträger gehalten und die Wicklung ist ohne den Träger unter Umständen nicht formstabil. Dies bewirkt den Vorteil, dass der supraleitende Leiter an sich im Vergleich zum Stand der Technik mechanisch weniger fest und insbesondere dünner ausgebildet werden kann. Insbesondere kann auf das im Stand der Technik übliche Imprägniermittel oder Vergussmittel der Spulenwicklung verzichtet werden. Durch eine solche nicht eigenstabile Ausgestaltung der Wicklung kann als weiterer Vorteil erreicht werden, dass die einzelnen Windungen leichter und effizienter gekühlt werden können.

Dies wird bei der erfindungsgemäßen Spuleneinrichtung allgemein vorteilhaft dadurch erreicht, dass eine Kühlung über das die Wicklung tragende Hohlrohr selbst vermittelt wird. Hierzu ist der Innenraum des Hohlrohrs als Kühlmittelkanal ausgebildet. Durch diese räumliche Nähe eines kryogenen Kühlmittels kann auf besonders einfache Weise eine effiziente Kühlung des supraleitenden Leiters erreicht werden. Ein weiterer Vorteil dieser besonders engen thermischen Anbindung des Leiters an das fluide Kühlmittel liegt darin, dass mittels der Kühlung aus dem Wicklungsinneren die kurzfristige Ausbildung von lokalen Hotspots (also beim Betrieb des Supraleiters gebildeten heißen Stellen entweder aufgrund von Quench-Vorgängen oder transienten Betriebszuständen beziehungsweise Fehlerfällen) toleriert und abgepuffert werden kann, ohne dass es zu einem Zusammenbruch der supraleitenden Eigenschaften der ganzen Spulenwicklung kommt. Ein solcher Zusammenbruch kann beim erfindungsgemäßen Aufbau dadurch vermieden werden, dass die Spulenwindungen über das Hohlrohr des Wicklungsträgers thermisch eng an das tiefkalte Kühlmittel angekoppelt sind. Weiterhin können die Spulenwindungen nach radial außen hin thermisch gut gegen die außen liegende warme Umgebung isoliert sein. Eine Ausgestaltung des die Wicklung tragenden Hohlrohrs mit vergleichsweise hoher thermischer Leitfähigkeit und/oder hoher Wärmekapazität trägt somit vorteilhaft zum Vermeiden eines solchen Zusammenbruchs bei. Material sowie Innendurchmesser und Außendurchmesser des Hohlrohrs können vorteilhaft so dimensioniert sein, dass sich eine gute thermische Anbindung bei gleichzeitig ausreichend hoher Wärmekapazität und geringem Strömungswiderstand für das Kühlmittel ergibt.

Ein weiterer Vorteil der erfindungsgemäßen Ausführung im Vergleich zum Stand der Technik kann darin gesehen werden, dass für die wenigstens eine übergeordnete Spulenwindung zumindest in Teilbereichen relativ geringe Biegeradien toleriert werden können und somit für die Wicklung insgesamt relativ kompakte Wickelköpfe erreicht werden können. Dieser Vorteil rührt daher, dass bei der Herstellung einer Helixwicklung aus dem supraleitenden Leiter sowohl für die gleichmäßige Biegung des Leiters innerhalb der untergeordneten Helixwindungen als auch für die übergeordnete Biegung der Helix als Ganzes geringere Biegeradien toleriert werden können als beispielsweise für die Biegung eines Bandleiters innerhalb der Bandebene. Aber auch eine lokal eng begrenzte Biegung senkrecht zur Leiterebene - beispielsweise in einer der Ecken einer Rechteckspule nach dem Stand der Technik - kann sich kritischer auswirken als eine gleichmäßig enge Wicklung mit kleinen Biegeradien innerhalb der Helix.

Insgesamt wird durch die Erfindung eine Spuleneinrichtung zur Verfügung gestellt, welche vorteilhaft sowohl mechanisch stabil als auch effektiv und zuverlässig kühlbar ist und mit kompakten Wickelköpfen ausgestaltet werden kann.

Der erfindungsgemäße Rotor weist wenigstens eine derartige erfindungsgemäße Spuleneinrichtung auf. Dabei ergeben sich die Vorteile des erfindungsgemäßen Rotors analog zu den vorab beschriebenen Vorteilen der erfindungsgemäßen Spuleneinrichtung.

Vorteilhafte Ausgestaltungen und Weiterbildungen der Erfindung gehen aus den von den Ansprüchen 1 und 9 abhängigen Ansprüchen sowie der folgenden Beschreibung hervor. Dabei können die beschriebenen Ausgestaltungen der Spuleneinrichtung und des Rotors allgemein vorteilhaft miteinander kombiniert werden.

So weist die Spuleneinrichtung allgemein vorteilhaft eine Spulenachse auf, welche insbesondere eine Spulenlängsachse einer länglichen geformten Spule sein kann. Die Spuleneinrichtung kann in diesem Fall zwei axiale Spulenschenkel aufweisen, die sich im Wesentlichen in axialer Richtung erstrecken. Besonders vorteilhaft kann es sich dabei um gerade axiale Spulenschenkel handeln, die sich parallel zu der Spulenachse erstrecken. Alternativ können die axialen Spulenschenkel jedoch auch gebogen oder geknickt ausgestaltet sein, so dass sich für einzelne Teilbereiche ein leichter Winkel mit der Spulenachse ergeben kann. Vorteilhaft kann ein solcher Winkel β in einem Bereich bis zu β = arctan(W/L) liegen, wobei W die maximale Breite der Spule ist (senkrecht zur Längsachse) und L die Länge der Spule ist.

Die allgemeine Ausführungsform mit axialen Spulenschenkeln ist besonders vorteilhaft für die Anwendung der Spuleneinrichtung als Rotorspule in einer rotierenden elektrischen Maschine. Bei einer solchen Anwendung sind vor allem die bezüglich der Maschinenachse axial orientierten Spulenschenkel maßgeblich für die elektromagnetische Wechselwirkung zwischen Rotor und Stator. Bei solch einer Anwendung können insbesondere die Spulenlängsachsen von einer Mehrzahl solcher Spuleneinrichtungen jeweils parallel zu der zentralen Rotorachse (und damit der Maschinenachse) verlaufen.

Allgemein vorteilhaft kann innerhalb der axialen Spulenschenkel der supraleitende Leiter einen lokalen Winkel α mit der Spulenachse ausbilden, der im Bereich von bis zu 89,4° liegt. Obwohl die Spulenschenkel als Ganzes parallel zu der Spulenachse liegen, verläuft der supraleitende Leiter selbst aufgrund der untergeordneten helikalen Wicklung nicht parallel zu dieser Achse. Für die elektromagnetische Wechselwirkung in einer elektrischen Maschine ist es aber vorteilhaft, wenn der vorliegende Leiter einen möglichst geringen Winkel mit der Maschinenachse bildet. Dies wird durch den genannten vorteilhaften Winkelbereich für den Leiter innerhalb der Helixwicklung erreicht. Besonders vorteilhaft ist der Betrag des Winkels des Leiters mit der Längsachse innerhalb der axialen Leiterschenkel im Wesentlichen gleich. Innerhalb der Helix wechselt nur die lokale Orientierung des Leiters zu der Längsachse. Es ist jedoch grundsätzlich auch möglich, dass der Betrag des Winkels variiert. In solchen Fällen soll der genannte Winkelbereich möglichst für die gesamten axialen Spulenschenkel nicht überschritten werden.

Besonders vorteilhaft kann der Winkel α im Bereich zwischen 11° und 89,5° liegen, insbesondere im vorteilhaften Teilbereich zwischen 11° und 79° oder im besonders bevorzugten Teilbereich zwischen 11° und 22°. Die beispielhaft genannten Werte für die Winkel α können dabei insbesondere mit den folgenden Parametern erreicht werden: Ein Winkel α von etwa 11° kann beispielsweise bei einem Außenradius des Hohlrohrs von 10 mm, einer Leiterbreite von 20 mm und einer Ganghöhe von 200 mm realisiert werden. Ein Winkel α von etwa 22° kann beispielsweise bei einem Außenradius des Hohlrohrs von 10 mm, einer Leiterbreite von 20 mm und einer Ganghöhe von 100 mm realisiert werden. Ein Winkel α von etwa 79° kann beispielsweise bei einem Außenradius des Hohlrohrs von 10 mm, einer Leiterbreite von 4 mm und einer Ganghöhe von 8 mm realisiert werden. Ein Winkel α von etwa 89,5° kann beispielsweise bei einem Außenradius des Hohlrohrs von 50 mm, einer Leiterbreite von 2 mm und einer Ganghöhe von 2 mm realisiert werden. Die Parameterkombinationen der genannten Beispiele sind so dimensioniert, dass bei der Torsion innerhalb der Helixwicklung die Grenzwerte für irreversible Dehnung (εᵢᵣᵣ) von supraleitenden Bandleitern eingehalten werden, welche beispielsweise im Bereich zwischen εᵢᵣᵣ = 0,2% bis 2% liegen können. Allgemein und jeweils unabhängig von den genannten Kombinationen mit anderen Parameterwerten kann die Leiterbreite vorteilhaft im Bereich zwischen 2 mm und 20 mm, insbesondere zwischen 4 mm und 12 mm liegen. Allgemein und jeweils unabhängig von den genannten Kombinationen mit anderen Parameterwerten kann die Ganghöhe der Helix im Bereich zwischen dem 1fachen und 10fachen Wert der Leiterbreite liegen, insbesondere im Bereich zwischen dem 2fachen und 5fachen dieses Werts. Um eine möglichst weitgehend axial ausgerichtete Geometrie der einzelnen Leiter entsprechend dem genannten Winkelbereich zu erreichen, ist es vorteilhaft wenn die helixartige Wicklung mit einer vergleichsweise großen Ganghöhe ausgebildet ist. Mit anderen Worten sollen die untergeordneten Einzelwindungen der helixartigen Wicklung insgesamt nicht zu eng gewickelt sein. Dies gilt insbesondere für die genannten axialen Schenkel, aber optional auch für gegebenenfalls zusätzlich vorliegende Verbindungsschenkel.

Allgemein kann die Spuleneinrichtung zusätzlich zu den beiden genannten axialen Leiterschenkeln zwei axial endständige Verbindungsschenkel aufweisen. Durch diese dann insgesamt vier Spulenschenkel kann dann eine insgesamt geschlossene ringförmige Spuleneinrichtung definiert sein. Eine solche Spuleneinrichtung kann beispielsweise insgesamt die Grundform einer Rechteckspule (optional mit leicht abgerundeten Ecken), einer oval geformten Spule beziehungsweise einer Rennbahnspule aufweisen.

Gemäß einer ersten vorteilhaften Ausführungsform können die endständigen Verbindungsschenkel jeweils als gerade Schenkel ausgebildet sein. Bei dieser Ausführungsform kann dann sogar die gesamte Spule vorteilhaft innerhalb einer Spulenebene verlaufen. Es liegt also hierbei eine besonders einfache Spulengeometrie vor, was auch die Anordnung und Halterung der Spuleneinrichtung auf einem mechanisch tragenden Rotorkörper erleichtern kann.

Alternativ können die endständigen Verbindungsschenkel gemäß einer zweiten vorteilhaften Ausführungsform aber auch jeweils als gebogene Schenkel ausgebildet sein. Insbesondere können diese Verbindungsschenkel aus der Ebene der axialen Schenkel heraus gebogen sein. Beispielsweise kann eine solche Biegung eine Biegung um eine zentrale Rotorachse eines übergeordneten Rotors sein, so dass die Spulenschenkel der Spuleneinrichtung insgesamt auf einer gemeinsamen Zylindermantelfläche verlaufen. Hierdurch wird beispielsweise im Zentrum einer Rotoreinheit Platz für die Rotorwelle geschaffen.

Allgemein vorteilhaft kann das Hohlrohr, welches die untergeordnete helixartige Wicklung trägt, eine runde Querschnittsform aufweisen. Eine solche runde Querschnittsform insbesondere auf der Außenseite des Hohlrohrs erleichtert die Aufbringung einer helixartigen Wicklung aus einem supraleitenden Leiter, ohne dass dieser Leiter zu stark geknickt werden muss. Besonders vorteilhaft kann die Außenseite des Hohlrohrs einen annähernd kreisförmigen Querschnitt aufweisen, was dann zu einer besonders symmetrischen Form der helixartigen Wicklung führt. Vorteilhaft kann die Außenseite des Hohlrohrs eine oder mehrere helixartig umlaufende Nuten aufweisen, in die der helixartig gewickelte supraleitende Leiter eingelegt werden kann.

Auch die Innenfläche des Hohlrohrs kann allgemein vorteilhaft mit rundem und insbesondere kreisförmigem Querschnitt ausgebildet sein, um eine widerstandsarme Zirkulation von fluidem Kühlmittel im Inneren des Hohlrohrs zu ermöglichen.

Allgemein vorteilhaft kann das Hohlrohr einen Innendurchmesser von 50 mm oder weniger aufweisen. Insbesondere kann der Innendurchmesser im Bereich von 2 mm bis 20 mm liegen. Hierdurch ist ein entsprechend enger Kühlmittelkanal definiert. In diesem Bereich kann eine ausreichend hohe Kühlleistung erreicht werden. Der Außendurchmesser kann entsprechend beispielsweise im Bereich von 4 mm bis 100 mm liegen, besonders vorteilhaft im Bereich zwischen 10 mm und 50 mm. Bei nicht exakt kreisförmigen Rohrquerschnitten soll unter den genannten Durchmessern analog die jeweils größte innere beziehungsweise äußere Abmessung verstanden werden.

Der genannte supraleitende Leiter kann allgemein einen oder mehrere supraleitende Bandleiter umfassen. Ein solcher Bandleiter kann eine vergleichsweise dünne supraleitende Schicht auf einem Trägersubstrat aufweisen.

Der supraleitende Leiter allgemein (und insbesondere ein supraleitender Bandleiter) kann besonders vorteilhaft ein hochtemperatursupraleitendes Material aufweisen. Hochtemperatursupraleiter (HTS) sind supraleitende Materialien mit einer Sprungtemperatur oberhalb von 25 K und bei einigen Materialklassen, beispielsweise den Cuprat-Supraleitern, oberhalb von 77 K, bei denen die Betriebstemperatur durch Kühlung mit anderen kryogenen Materialien als flüssigem Helium erreicht werden kann. HTS-Materialien sind auch deshalb besonders attraktiv, da diese Materialien abhängig von der Wahl der Betriebstemperatur hohe obere kritische Magnetfelder sowie hohe kritische Stromdichten aufweisen können.

Der Hochtemperatursupraleiter kann beispielsweise Magnesiumdiborid und/oder einen oxidkeramischen Supraleiter, beispielsweise eine Verbindung des Typs REBa₂Cu₃Oₓ (kurz REBCO) aufweisen, wobei RE für ein Element der seltenen Erden oder eine Mischung solcher Elemente steht.

Bei der Ausführungsform mit einem supraleitenden Bandleiter kann der Leiter insbesondere auch durch einen Stapel von mehreren übereinanderliegenden und/oder nebeneinanderliegenden Bandleitern gebildet sein. Bei dieser Ausführungsform kann für die einzelnen Leiterwindungen eine noch höhere Stromtragfähigkeit erreicht werden.

Der jeweilige einzelne supraleitende Bandleiter (welcher insbesondere Teil eines Stapels sein kann) weist eine Dicke von nur 150 µm oder weniger auf, insbesondere sogar im Bereich von 100 µm oder weniger. Im Vergleich zu typischen supraleitenden Rotorwicklungen handelt es sich bei dieser Ausführungsform um eine vergleichsweise dünne Ausführung des Bandleiters. Dies wird im Zusammenhang mit der vorliegenden Erfindung vorteilhaft ermöglicht, da der Bandleiter selbst keine eigenstabilen mechanischen Eigenschaften aufweisen muss, sondern vielmehr von dem Hohlrohr, um das die Helix gewickelt ist, mechanisch getragen wird. Ein Vorteil einer solchen vergleichsweise dünnen Leiterausführung ist, dass hiermit beim Wickeln der helixartigen Wicklung die hier benötigten vergleichsweise geringen Biegeradien erreicht werden können, ohne dass es zu einer Schädigung des supraleitenden Leiters kommt. Je dünner der einzelne Bandleiter insgesamt ist, desto engere Biegungen sind typischerweise insgesamt möglich. Ein weiterer unabhängiger Vorteil von vergleichsweise niedrigen Leiterdicken ist in der vergleichsweise höheren Stromdichte der daraus gewickelten Wicklung zu sehen.

Um die vorab genannte niedrige Gesamtdicke des Bandleiters zu erreichen, können insbesondere ein Substrat des Bandleiters und/oder eine oder mehrere Stabilisierungsschichten des Bandleiters im Vergleich zum Stand der Technik relativ dünn ausgebildet sein. So kann beispielsweise das Trägersubstrat des Bandleiters eine Dicke von nur 75 µm oder weniger aufweisen, insbesondere sogar nur höchstens 50 µm oder sogar nur höchstens 25 µm. Die optional vorliegenden elektrischen Stabilisierungsschichten können beispielsweise zusammengenommen eine Dicke von nur 100 µm oder weniger aufweisen, insbesondere sogar nur höchstens 50 µm oder sogar nur höchstens 25 µm. Derartige Stabilisierungsschichten sind typischerweise als metallisch leitfähigen Schichten gebildet und können das Schichtsystem aus Substrat, Supraleiterschicht und optionalen weiteren Schichten entweder einseitig oder beidseitig abdecken. Diese Stabilisierungsschichten können bei einem lokalen Zusammenbruch der Supraleitung die Funktion eines elektrischen Shunts übernehmen. Hierfür ist typischerweise eine gewisse Mindestdicke erforderlich. Im Zusammenhang mit der vorliegenden Erfindung kann diese Dicke jedoch deutlich geringer gewählt werden als beim Stand der Technik, da vorteilhaft eine solche Shuntfunktion auch durch ein optional elektrisch leitfähiges Hohlrohr mit übernommen werden kann.

Allgemein kann der supraleitende Leiter zumindest abschnittsweise einen vergleichsweise kleinen Biegeradius aufweisen, der sich aus dem Außendurchmesser des Hohlrohrs und der gewählten Ganghöhe ergibt. Hierdurch kann insgesamt eine vergleichsweise kompakte Geometrie der gesamten Spuleneinrichtung und insbesondere der Wickelköpfe der Spuleneinrichtung erreicht werden. Alternativ oder zusätzlich kann eine insgesamt kompakte Geometrie auch dadurch erreicht werden, dass das Hohlrohr, das die helixartige Wicklung trägt, zumindest abschnittsweise einen Biegeradius r unterhalb von 100 mm aufweist, insbesondere sogar unterhalb von 50 mm. Eine derart enge Biegung des tragenden Hohlrohrs ist insbesondere in den Bereichen zwischen den axialen Leiterschenkeln und endständigen Verbindungsschenkel zweckmäßig, weil damit eine besonders kompakte Geometrie der Wickelköpfe erzielt werden kann. Dies kann insbesondere durch Wickeln der Helix auf ein vorgeformtes Hohlrohr erreicht werden.

Erfindungsgemäß ist die Spuleneinrichtung als Spuleneinrichtung für eine elektrische Maschine ausgebildet. Insbesondere kann es sich um eine Spuleneinrichtung für den Rotor einer elektrischen Maschine handeln. Insbesondere kann es sich um eine Spuleneinrichtung für die Erregerwicklung eines solchen Rotors handeln. Bei der Ausführungsform als Rotorwicklung liegt die genannte Spulenachse zweckmäßig parallel zu der zentralen Maschinenachse beziehungsweise der zentralen Rotorachse. Bei einer derartigen Anwendung der Spuleneinrichtung kommen die weiter oben genannten Vorteile der erfindungsgemäßen Ausgestaltung besonders gut zum Tragen.

Allgemein kann die elektrische Spuleneinrichtung vorteilhaft auch noch weitere Elemente zusätzlich zu dem Hohlrohr, dem innenliegenden Kühlmittelkanal und der auf dem Hohlrohr aufgebrachten helixartigen Wicklung aufweisen. Insbesondere kann es sich bei solchen zusätzlichen Elementen um radial weiter außen liegende Elemente handeln, welche die helixartige Wicklung und das Hohlrohr konzentrisch umgeben. Beispielsweise können ein oder mehrere außenliegende Halteelemente radial außerhalb der helixartigen Leiterwindungen angeordnet sein. Besonders vorteilhaft können solche Halteelemente elektrisch leitfähig ausgebildet sein und somit auch eine elektrisch abschirmende Wirkung aufweisen. Dies kann insbesondere zur Vermeidung von elektrischen Wechselstromverlusten in den weiter innenliegenden Schichten beitragen. Alternativ oder zusätzlich kann eine radial außen liegende und insbesondere mechanisch vorgespannte Bandage die helixartige Wicklung (und optional auch ein oder mehrere solche Halteelemente) umgeben und auf diese Weise zu einer zusätzlichen mechanischen Fixierung beitragen. Eine solche Bandage kann beispielsweise aus einem elektrisch nicht leitfähigen Material und/oder aus einem thermisch gering leitfähigen Material gebildet sein. Radial noch weiter außenliegend kann optional eine thermische Isolationsschicht vorgesehen sein, welche beispielsweise ein Aerogel und/oder eine Multilagenisolation und/oder einen Vakuumraum umfassen kann. Bei all diesen genannten optional vorliegenden Schichten kann es sich um konzentrische Elemente handeln, welche jeweils innerhalb einer zugeordneten Zylindermantelschicht vorliegen. Auf diese Weise kann durch eines oder mehrere der genannten Elemente besonders vorteilhaft eine hohe mechanische Stabilität bei gleichzeitig guter thermischer Isolation erreicht werden.

Die Spuleneinrichtung kann allgemein Kühlmittelanschlüsse aufweisen, welche dazu dienen, den im Inneren des Hohlrohrs liegenden Kühlmittelkanal mit den übrigen Teilen eines Kühlmittelkreislaufs zu verbinden. Beispielsweise können für ein solches Hohlrohr zwei solche Kühlmittelanschlüsse vorgesehen sein, von denen einer als Zufluss und der andere als Abfluss dienen kann. Diese Anschlüsse können bezüglich der Ringstruktur des Hohlrohrs seitlich angeordnet sein, mit anderen Worten nicht-tangential zu dem Ring.

Alternativ oder zusätzlich zu den seitlichen Anschlüssen kann die Spuleneinrichtung vorteilhaft ein Verbindungsstück aufweisen, welches dazu dient, zwei Endbereiche des Hohlrohrs zu einem insgesamt geschlossenen Ring zu verbinden. Bei einem derartigen Verbindungsstück kann es sich alternativ entweder ebenfalls um ein Hohlrohr oder aber um ein innen geschlossenes Verbindungsstück handeln. Je nach Ausführungsform ergibt sich damit entweder ein insgesamt ringförmig geschlossener Kanal oder nur ein fast ringförmig durchgehender Kanal, welcher sich dann beispielsweise vom Zufluss bis zum Abfluss erstreckt.

Allgemein kann die helixartige Windung aus dem supraleitenden Leiter insgesamt elektrisch über die übergeordnete Windung der Spuleneinrichtung hinweg zu einem ringförmigen Stromkreis geschlossen sein. Dies ist beispielsweise nützlich, um die Spuleneinrichtung in einem Dauerstrom-Modus zu betreiben.

Alternativ kann die Spuleneinrichtung jedoch auch als offene Spule vorliegen, welche über zwei elektrische Anschlüsse in den Endbereichen der Spule mit einem äußeren elektrischen Stromkreis verbindbar ist.

Das Hohlrohr des Wicklungsträgers kann allgemein vorteilhaft aus einem metallischen Material gebildet sein oder ein metallisches Material umfassen. Ein metallisches Material ist besonders günstig, um eine gute thermische Ankopplung der helixartigen Windungen an das im Innenraum fließende Kühlmittel zu erreichen. Beispielsweise kann das Hohlrohr aus Kupfer gebildet sein oder zumindest Kupfer umfassen oder alternativ auch Stahl und/oder Aluminium umfassen. Alternativ oder zusätzlich kann das Material des Hohlrohrs aber auch einen Faserverbundwerkstoff, beispielsweise einen faserverstärkten Kunststoff umfassen. Mit den letztgenannten Materialien kann vorteilhaft eine geringe Dichte erreicht werden.

Gemäß einer bevorzugten Ausführungsform des Rotors kann dieser eine magnetische Polzahl n aufweisen, wobei n vorteilhaft geradzahlige Werte zwischen 2 und 64 annehmen kann. Hierzu kann der Rotor allgemein mehrere erfindungsgemäße Spuleneinrichtungen umfassen.

Gemäß einer weiteren bevorzugten Ausführungsform des Rotors kann dieser ein Kühlsystem zur Kühlung des supraleitenden Leiters auf eine kryogene Betriebstemperatur aufweisen, wobei das Kühlsystem dazu ausgestaltet ist, ein fluides Kühlmittel im Kühlmittelkanal der Spuleneinrichtung zu zirkulieren. Hierdurch kann besonders vorteilhaft eine Betriebstemperatur des supraleitenden Leiters erreicht werden, welche unterhalb der Sprungtemperatur des verwendeten Supraleiters liegt.

Bei dem fluiden Kühlmittel kann es sich insbesondere um flüssigen Wasserstoff, flüssiges Helium, flüssiges Neon, flüssigen Stickstoff, flüssigen Sauerstoff und/oder flüssiges Methan handeln. Dabei kann bei Verwendung all dieser kryogenen Kühlmittel prinzipiell die flüssige Form neben der Gasform vorliegen, und es kann durch ein Verdampfen der Flüssigkeit im Bereich der zu kühlenden Komponenten eine zusätzliche Kühlwirkung erreicht werden. So ist es möglich, dass das kryogene Kühlmittel im Inneren des Hohlrohrs beziehungsweise im übergeordneten Kühlkreislauf insbesondere nach dem Thermosiphon-Prinzip und/oder nach Art eines Wärmerohrs zirkuliert.

Gemäß einer allgemein bevorzugten Ausführungsform des Rotors kann dieser zusätzlich einen Rotorkern aufweisen, auf welchem die wenigstens eine Spuleneinrichtung mechanisch gehalten wird. Insbesondere ist dieser Rotorkern dann dazu ausgebildet, beim Betrieb des Rotors auf einer warmen Betriebstemperatur vorzuliegen. Im vorliegenden Zusammenhang soll unter einer solchen warmen Betriebstemperatur eine Temperatur deutlich oberhalb der Sprungtemperatur des Supraleiters verstanden werden, welche insbesondere in der Nähe oder sogar noch oberhalb der Raumtemperatur liegen kann. Diese Ausführungsform hat den Vorteil, dass nicht der gesamte Rotor gekühlt werden muss, sondern nur ein oder mehrere lokal begrenzte Teilbereiche, in denen ein oder mehrere erfindungsgemäße Spuleneinrichtungen angeordnet sind.

Allgemein kann der Rotorkern (unabhängig davon, ob er auf einem warmen oder kalten Temperaturniveau betrieben wird) aus einem weichmagnetischen Material gebildet sein oder wenigstens ein solches weichmagnetisches Material umfassen. Ein derartiger Rotorkern ist vorteilhaft für die magnetische Flussführung im Rotor. Alternativ kann der Rotorkern aber auch aus nicht-magnetischem Material gebildet sein und beispielsweise Aluminium und/oder nicht-magnetischen Stahl umfassen.

Um die Halterung von ein oder mehreren kryogenen supraleitenden Wicklungen auf einem warmen Rotorkern zu ermöglichen ist es zweckmäßig, die wenigstens eine Spuleneinrichtung über (ein oder mehrere) thermisch gering leitfähige Halteelemente an dem warmen Rotorkern befestigen. Beispielsweise können dabei Haltestege aus Kunststoff und insbesondere faserverstärktem Kunststoff und/oder aus Keramik zum Einsatz kommen. Prinzipiell kann hier aber auch ein metallisches Material (beispielsweise Stahl) zum Einsatz kommen, da die eingebrachte Wärme direkt im Kühlrohr abgeführt wird und nicht den supraleitenden Leiter erreicht.

Alternativ oder zusätzlich können die einzelnen kryogenen supraleitenden Wicklungen über thermische isolierende Halteschlaufen an dem warmen Rotorkörper befestigt sein, ähnlich wie dies in den Schriften US9431864B2 und US8664809B2 beschrieben ist.

Weiterhin kann der Rotorkern vorteilhaft ein oder mehrere Nuten aufweisen, um die Spuleneinrichtung(en) aufzunehmen. Beispielsweise kann für jeden Längsschenkel der Spuleneinrichtung eine solche Nut am Rotorkern vorgesehen sein. Alternativ oder zusätzlich können auch für die endständige Verbindungsschenkel Nuten vorgesehen sein, um die entsprechenden Spulenteile zu führen.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines Teils einer Helixwicklung auf einem Hohlrohr zeigt,
- Figur 2: einen Querschnitt und eine schematische Seitenansicht einer solchen Helixwicklung zeigt,
- Figur 3: eine schematische Querschnittsdarstellung eines zusammengesetzten supraleitenden Leiters zeigt,
- Figur 4: eine schematische Querschnittsdarstellung einer Helixwicklung nach einem weiteren Beispiel zeigt,
- Figur 5: eine schematische Aufsicht eines Spulenelements nach einem Beispiel der Erfindung zeigt,
- Figur 6: eine schematische perspektivische Darstellung für ein Spulenelement auf einem Rotorkern zeigt,
- Figur 7: eine Detailansicht des Spulenelements der Figur 6 zeigt,
- Figur 8: eine schematische Darstellung für ein erstes Ausführungsbeispiel eines Rotors zeigt und
- Figur 9: eine schematische Darstellung für ein zweites Ausführungsbeispiel eines Rotors zeigt.

In den Figuren sind gleiche oder gleich wirkende Elemente mit gleichen Bezugszeichen versehen.

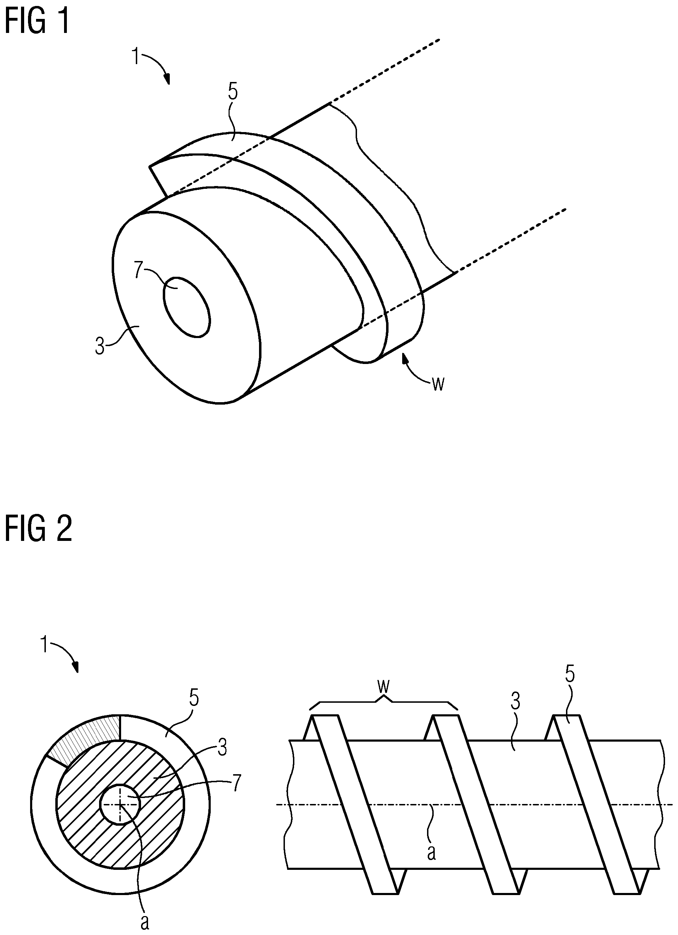

Figur 1 zeigt eine schematische perspektivische Darstellung eines Teilbereichs einer elektrischen Spuleneinrichtung 1 nach einem ersten Beispiel der Erfindung. Gezeigt ist ein Teil einer Helixwicklung aus einem supraleitenden Leiter 5, welche auf einem Hohlrohr 3 aufgewickelt ist. Exemplarisch ist hier nur ein Teil einer Windung w des supraleitenden Leiters um das Hohlrohr gezeigt. Insgesamt liegt jedoch eine Vielzahl solcher Windungen w vor, welche eine helixartige Wicklung ausbilden. Im Inneren des Hohlrohrs 3 ist ein Kühlmittelkanal 7 ausgebildet, in dem ein fluides Kühlmittel strömen kann, so dass eine Kühlung des supraleitenden Leiters auf eine kryogene Betriebstemperatur ermöglicht wird. Das Hohlrohr 3 kann aus einem thermisch gut leitfähigen Material, beispielsweise aus Kupfer, gebildet sein. Elektrisch kann der Leiter 5 gegen das Hohlrohr 3 isoliert sein, dies ist jedoch nicht zwingend nötig.

Figur 2 zeigt auf der linken Seite eine Querschnittsdarstellung und auf der rechten Seite eine schematische Seitenansicht der Spuleneinrichtung 1 aus der Figur 1. Aus der Querschnittsdarstellung ist ersichtlich, dass die helixartige Wicklung eine lokale Achse a aufweist, um welche die einzelnen Teilelemente der Spuleneinrichtung konzentrisch angeordnet sind. In der schematischen Seitenansicht ist ein Ausschnitt mit etwa zweieinhalb Windungen w der Helixwicklung gezeigt. Der gezeigte Ausschnitt kann beispielsweise Teil eines insgesamt geraden Spulenschenkels sein, und die untergeordneten Helixwindungen w bilden Teilabschnitte auf diesem insgesamt geraden Spulenschenkel.

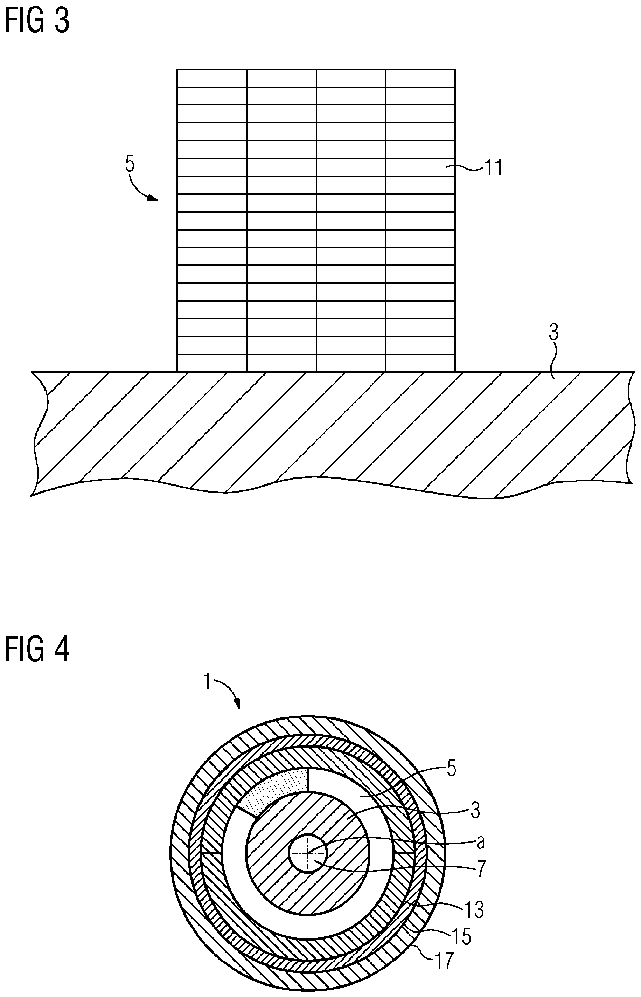

Der supraleitende Leiter 5 aus den Figuren 1 und 2 kann beispielsweise aus mehreren Teilleitern 11 zusammengesetzt sein. Figur 3 zeigt eine schematische Querschnittsdarstellung eines solchen zusammengesetzten Leiters 5, der auf einer Außenfläche des Hohlrohrs 3 aufliegt. In diesem Beispiel ist der gesamte Leiter 5 durch mehrere nebeneinanderliegende Stapel von jeweils mehreren übereinanderliegenden supraleitenden Bandleitern 11 gebildet. Diese einzelnen Bandleiter 11 umfassen jeweils ein Trägersubstrat und eine vergleichsweise dünne supraleitende Schicht sowie optional noch weitere Zwischenschichten und/oder elektrische Stabilisierungsschichten. Diese einzelnen Bandleiter sind jeweils vergleichsweise sehr dünn, so dass sie zur Bildung der Helixwicklung mit vergleichsweise kleinen Biegeradien gebogen werden können. Durch die Ausgestaltung des gesamten Leiters 5 mit vielen einzelnen Teilleitern 11 ist insgesamt auch eine sehr hohe Stromtragfähigkeit und somit eine hohe Stromdichte möglich.

Figur 4 zeigt eine schematische Querschnittsdarstellung einer elektrischen Spuleneinrichtung 1 nach einem weiteren Beispiel der Erfindung. Auch diese Spuleneinrichtung umfasst eine helixartige Wicklung aus einem supraleitenden Leiter 5 auf einem Hohlrohr 3. Zusätzlich zu den bereits in Figur 1 und 2 gezeigten Elementen umfasst diese Spuleneinrichtung noch weitere bezüglich des Leiters 5 radial außenliegende und ebenfalls konzentrisch zur lokalen Achse a angeordnete Elemente. Es handelt sich hierbei in der Reihenfolge von innen nach außen um zwei Halteelemente 13, eine Bandage 15 und eine thermische Isolationsschicht 17. Allgemein ist jedes dieser Elemente nur optional vorhandenen, wobei jedoch die dargestellte radiale Abfolge insgesamt zweckmäßig ist. Die Halteelemente 13 sind hier durch zwei zylindrische Halbschalen gebildet, welche in diesem Beispiel jeweils aus einem metallischen Material sind und die Leiterwindungen w von außen mechanisch halten. Gleichzeitig wird durch die elektrisch leitfähige Eigenschaft dieser Halteelemente 13 die Funktion eines elektrischen Dämpfers erfüllt, so dass hochfrequente elektrische Felder vorteilhaft abgeschirmt werden können. Die Bandage 15 dient zur zusätzlichen mechanischen Fixierung und kann beispielsweise aus einem elektrisch isolierenden und thermisch schlecht leitfähigen Material gebildet sein. Radial noch weiter außenliegend liegt hier eine thermische Isolationsschicht 17 vor, welche insbesondere ein Aerogel, eine Mehrlagen-Isolation und/oder einem vakuumisolierende Hülle umfassen kann.

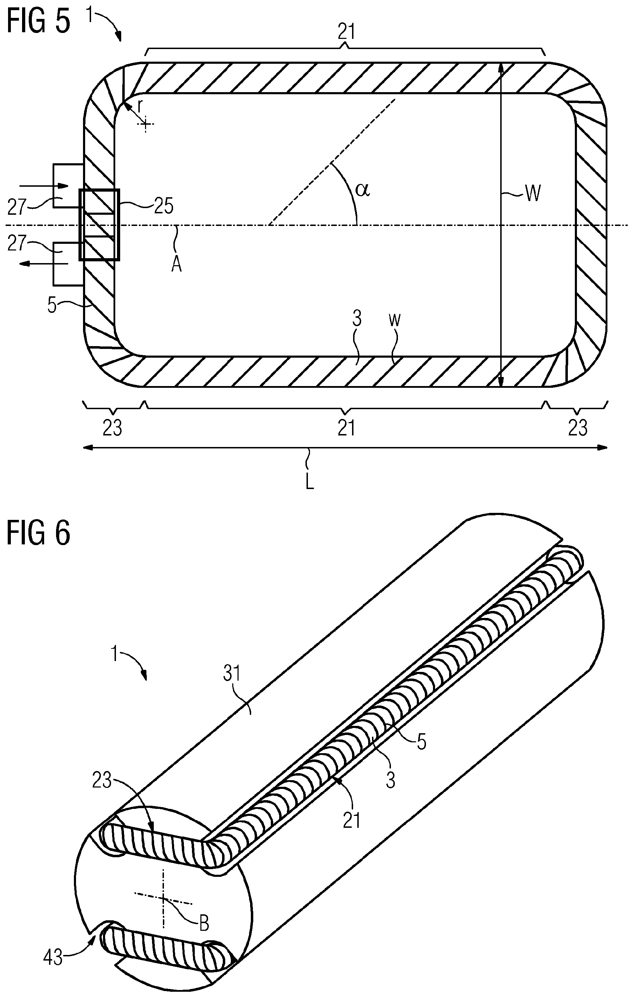

Figur 5 zeigt eine schematische Aufsicht eines Spulenelements 1 nach einem weiteren Beispiel der Erfindung. Auch dieses Spulenelements umfasst eine helixartige Wicklung aus einem supraleitenden Leiter 5 auf einem Hohlrohr 3. Lokal kann diese Wicklung ähnlich wie in den Figuren 1 und 2 gezeigt aufgebaut sein. Der Leiter 5 kann ähnlich wie in Figur 3 als zusammengesetzter Leiter vorliegen. Auch die optionalen Schichten aus dem Beispiel der Figur 4 können zusätzlich radial außen liegend um den Leiter 5 angeordnet sein, sie sind jedoch hier der Übersichtlichkeit halber nicht dargestellt. Wesentlich ist, dass die helixartige Wicklung aus einer Vielzahl von Einzelwindungen w insgesamt eine übergeordnete ringförmige Schlaufe bildet. Im gezeigten Beispiel ist diese Schlaufe durch eine insgesamt geschlossene rechteckförmige Spulenform gegeben, in welche die Helix als Ganzes gebogen ist. Diese übergeordnete Spulenform weist im gezeigten Beispiel zwei gerade axiale Spulenschenkel 21 auf, welche jeweils parallel zur Längsachse A der Spuleneinrichtung verlaufen. Zusätzlich weist die Spule zwei axial endständige Verbindungsschenkel 23 auf, so dass sich insgesamt ein geschlossener Ring ergibt. Elektrisch kann der supraleitende Leiter entweder zu einem Kurzschlussring geschlossen sein, oder es können hier nicht gezeigte elektrische Kontaktstellen vorgesehen sein, so dass die übergeordnete Spule insgesamt mit einem äußeren Stromkreis verbunden werden kann.

Die Spuleneinrichtung 1 der Figur 5 ist nicht maßstabsgetreu dargestellt. So kann insbesondere das Längenverhältnis der einzelnen Spulenschenkel deutlich anders gewählt sein und beispielsweise können die axialen Spulenschenkel 21 deutlich länger ausgestaltet sein als hier gezeigt. Auch die Steigung der einzelnen Leiterwindungen innerhalb der helixartigen Wicklung ist nicht maßstabsgetreu dargestellt. Für die elektromagnetische Wechselwirkung einer solchen Spuleneinrichtung 1 in einer elektrischen Maschine ist es allgemein vorteilhaft, wenn die einzelnen Leiterabschnitte des supraleitenden Leiters 5 (und insbesondere auch die entsprechenden Abschnitte der darin vorliegenden Teilleiter) einen möglichst geringen Winkel α mit der Längsachse der Spule einschließen. Beispielsweise kann α im Bereich der axialen Spulenschenkel generell vorteilhaft unterhalb von 79 Grad liegen.

Die in Figur 5 gezeigte Rechteckspule weist die Form eines Rechtecks mit abgerundeten Ecken auf. Dabei sind die Biegeradien r im Bereich der Ecken im Vergleich zu herkömmlichen supraleitenden Spulen vergleichsweise klein. Dies wird sowohl durch die Verwendung vergleichsweise dünner Bandleiter ermöglicht als auch durch die Tatsache, dass nicht der supraleitende Leiter 5 selbst, sondern dass die Helixwicklung tragende Hohlrohr 3 in diesem engen Biegeradius r gebogen ist. Der lokale Biegeradius des supraleitenden Leiters 5 innerhalb der Helixwicklung kann unterschiedlich zu diesem Biegeradius der übergeordneten Spulenform gewählt sein. Außerdem wird selbst bei einer engen Biegung innerhalb der Helixwicklung eine ungünstige Biegung des Bandleiters - nämlich eine enge Biegung innerhalb der Bandleiterebene - vorteilhaft vermieden.

Das Spulenelement 1 der Figur 5 weist zusätzlich im linken Bereich der Figur ein Verbindungsstück 25 und zwei seitliche Kühlmittelanschlüsse 27 auf. Das Verbindungsstück 25 kann beispielsweise aus Kupfer oder Edelstahl gebildet sein und dient dazu, die beiden Endstücke des zu einer übergeordneten Schlaufe geformten Hohlrohrs zu einem insgesamt geschlossenen Ring zu verbinden. Die im Verhältnis zu diesen Ring seitlich angeordneten Kühlmittelanschlüsse 27 dienen dazu, das fluide Kühlmittel in den innenliegenden Kühlmittelkanal 7 einzuleiten beziehungsweise aus ihm auszuleiten.

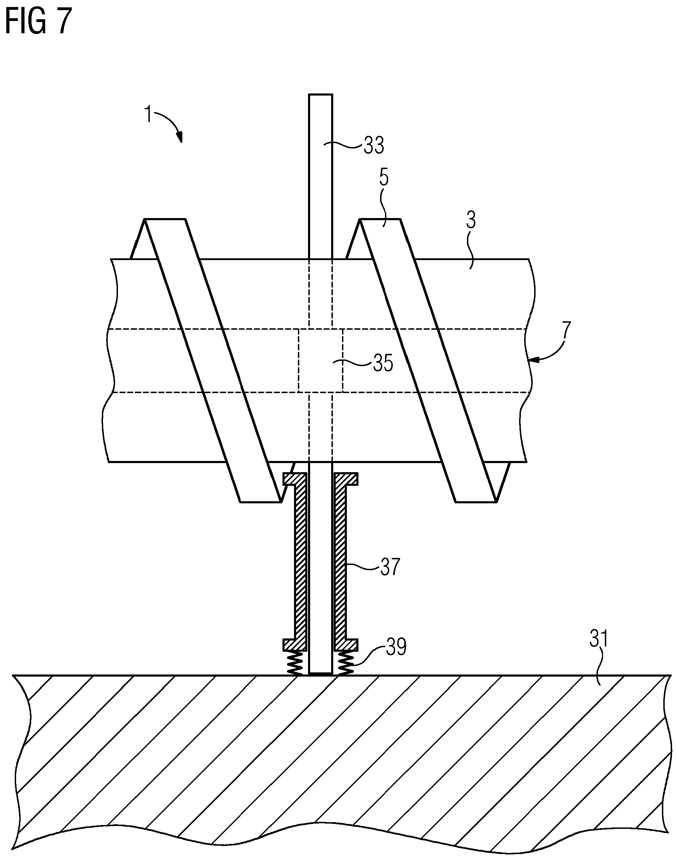

Figur 6 zeigt eine schematische perspektivische Darstellung eines Spulenelements 1, welches auf einem Rotorkern 31 angeordnet ist. Von dem Rotorkern 31 ist hier nur eine obenliegende Hälfte gezeigt. Das Spulenelement 1 kann insgesamt ähnlich wie beim Beispiel der Figur 5 aufgebaut sein, wobei hier die beiden Spulenschenkel 21 vergleichsweise länger ausgebildet sind. Die Spuleneinrichtung 1 wird in einer passenden Nut 43 des Rotorkerns gehalten. Vorteilhaft kann der supraleitende Leiter 5 beim Betrieb des Rotors durch das im Hohlrohr fließende Kühlmittel auf eine kryogene Betriebstemperatur gekühlt sein. Der Rotorkern 31 kann dagegen im Betrieb auf einem warmen Temperaturniveau sein. Hierzu kann die Aufhängung der Spuleneinrichtung 1 auf dem Rotorkern 31 durch thermisch gering leitfähige Elemente vermittelt sein, wie beispielsweise im Zusammenhang mit der Figur 7 noch deutlicher werden wird. Durch die geringen Biegeradien der Spuleneinrichtung 1 und die ausgeprägte Rechteckform wird erreicht, dass in einem solchen Rotor ein insgesamt geringer Platzbedarf für die axial endständigen Verbindungsschenkel 23 und somit für die Wickelköpfe vorliegt. Hierdurch wird eine insgesamt kompakte Ausführung des Rotors ermöglicht.

In Figur 7 ist eine Detailansicht des Spulenelements 1 der Figur 6 gezeigt. Gezeigt ist hier die Aufhängung dieses Spulenelements 1 an dem warmen Rotorkern 31. Um den kalten supraleitenden Leiter 5 und das ebenfalls kalte Hohlrohr 3 gegen den vergleichsweise warmen Rotorkern 31 thermisch zu isolieren, ist zur mechanischen Aufhängung ein Haltestift 33 aus einem thermisch vergleichsweise niedrig leitfähigen Material vorgesehen. Dieser Haltestift kann sich, wie durch gestrichelte Linien angedeutet, durch das Hohlrohr 3 hindurch erstrecken. Zusätzlich liegt hier eine optionale, ebenfalls thermisch gering leitfähige Manschette 37 vor, welches als Abstandselement zwischen der Spuleneinrichtung 1 und dem Rotorkern 31 wirkt. Optional können zwischen der Manschette 37 und dem Rotorkern 31 ein oder mehrere Federelemente 39 vorgesehen sein. Im Bereich des innenliegenden Kühlmittelkanals 7 kann der Haltestift 33 durch ein senkrecht zum Kühlmittelkanal verlaufendes Führungsrohr 35 geführt sein, so dass ein direkter Kontakt des Haltestifts 33 mit dem kryogenen Kühlmittel vorteilhaft vermieden wird. Insgesamt kann das Spulenelement 1 durch eine Mehrzahl von gleich oder ähnlich ausgestalteten Haltevorrichtungen an dem warmen Rotorkern 31 fixiert sein. Hierdurch wird eine mechanisch stabile und thermisch entkoppelte Aufhängung erreicht.

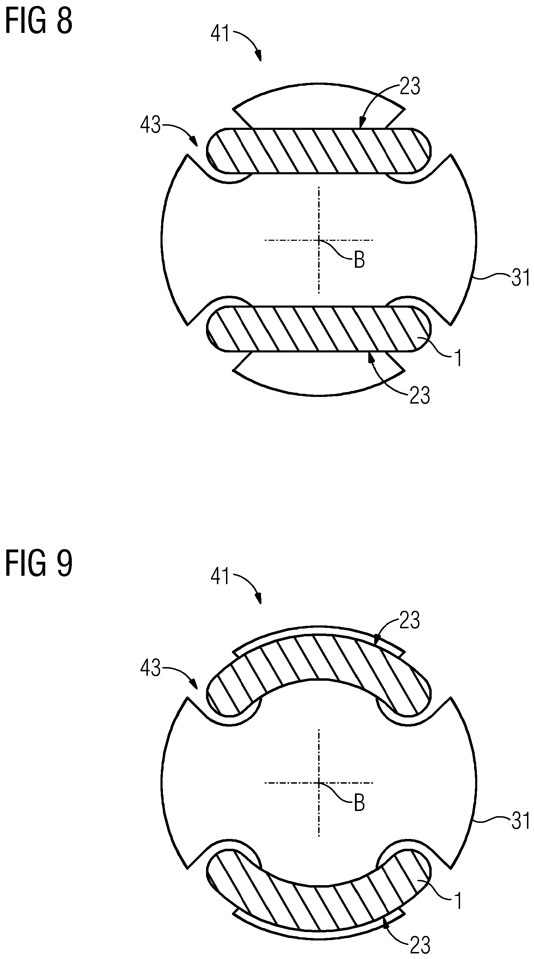

Figur 8 zeigt eine schematische Darstellung für ein Ausführungsbeispiel des erfindungsgemäßen Rotors 41. Gezeigt ist eine Draufsicht auf einen der axialen Endbereiche des Rotors. Der gezeigte Rotor 41 umfasst einen Rotorkern 31, welcher eine im Wesentlichen zylindrische Form und eine zentrale Rotorachse B aufweist. Dieser Rotor 41 weist zwei erfindungsgemäße Spuleneinrichtungen 1 auf, welche jeweils in entsprechenden Nuten 43 des Rotorkerns 31 eingelegt sind. Die Ausgestaltung der Spuleneinrichtung 1 kann insgesamt ähnlich wie bei den vorhergehenden Beispielen sein. Auch die Aufhängung kann ähnlich wie im Zusammenhang mit Figur 7 ausgestaltet sein. Im Beispiel der Figur 8 sind die beiden Spuleneinrichtungen 1 jeweils als flache Rechteckspulen ausgebildet, wobei die endständigen Spulenschenkel 23 jeweils gerade geformt sind und innerhalb einer gemeinsamen Spulenebene liegen.

Figur 9 zeigt eine ähnliche schematische Darstellung für ein alternatives Ausführungsbeispiel des Rotors. Dieser Rotor 41 weist ebenfalls einen warmen Rotorkern 31 und zwei darauf angeordnete Spuleneinrichtungen mit kryogen betriebenen Supraleitern auf. Im Unterschied zum Beispiel der Figur 8 sind hier die axial endständigen Verbindungsschenkel nicht als gerade Leiterschenkel, sondern als gebogene Leiterschenkel mit konstantem Biegeradius ausgeführt. Insgesamt weisen daher die Spuleneinrichtungen 1 jeweils eine zylindermantelförmige Grundform auf.

Die beiden unterschiedlichen in den Figuren 8 und 9 gezeigten Grundformen für die übergeordneten Spulenelemente 1 können durch entsprechende Biegung der die Wicklungen tragenden Hohlrohre leicht realisiert werden. Grundsätzlich ist die entsprechende Formgebung dieser Hohlrohre entweder vor oder nach dem Aufbringen der helixartigen Wicklung möglich.

### Bezugszeichenliste

- 1: Spuleneinrichtung
- 3: Hohlrohr
- 5: supraleitender Leiter
- 7: Kühlmittelkanal
- 11: Einzelleiter
- 13: Halteelement
- 15: Bandage
- 17: thermische Isolationsschicht
- 21: axiale Spulenschenkel
- 23: endständige Verbindungsschenkel
- 25: Verbindungsstück
- 27: seitliche Kühlmittelanschlüsse
- 31: Rotorkern
- 33: Haltestift
- 35: Führungsrohr
- 37: Manschette
- 39: Federelement
- 41: Rotor
- 43: Nut
- α: Winkel
- a: lokale Helixachse
- A: Längsachse der Spule
- B: Rotorachse
- L: Länge der Spule
- r: Biegeradius des Hohlrohrs
- w: untergeordnete Windung der Helix
- W: Breite der Spule

## Patentansprüche

1. Elektrische Spuleneinrichtung (1 einer elektrischen Maschine, umfassend
- einen Wicklungsträger, der aus einem länglichen Hohlrohr (3) gebildet ist, welches nach Art eines Rings geformt ist, so dass insgesamt durch die Ringform des Wicklungsträgers eine übergeordnete Schlaufe der Spuleneinrichtung (1) gebildet wird,
- und eine auf dem Wicklungsträger angebrachte Wicklung aus einem supraleitenden Leiter (5),
- wobei der supraleitende Leiter (5) in einer Vielzahl von Einzelwindungen (w) helixartig um das Hohlrohr (3) gewickelt ist, so dass sich durch die Ringform des Wicklungsträgers wenigstens eine übergeordnete Windung der gesamten Helix ergibt,
- und wobei das Innere des Hohlrohrs (3) als Kühlmittelkanal (7) zur Zirkulation eines fluiden Kühlmittels ausgebildet ist,
wobei der supraleitende Leiter (5) wenigstens einen Bandleiter (11) umfasst und die Dicke das Bandleiters (11) höchstens 150 µm ist.

2. Spuleneinrichtung (1) nach Anspruch 1, welche eine Längsachse (A) aufweist und welche zwei axiale Spulenschenkel (21) aufweist, die sich parallel zu der Längsachse (A) erstrecken.

3. Spuleneinrichtung (1) nach Anspruch 2, bei welchem innerhalb der axialen Spulenschenkel (21) der supraleitende Leiter (5) einen lokalen Winkel α von höchstens 79 Grad mit der Spulenachse (A) ausbildet.

4. Spuleneinrichtung (1) nach Anspruch 2 oder 3, welche zusätzlich zu den beiden axialen Spulenschenkeln (21) zwei axial endständige Verbindungsschenkel (23) aufweist, welche jeweils als gerade Schenkel ausgebildet sind.

5. Spuleneinrichtung (1) nach Anspruch 2 oder 3, welche zusätzlich zu den beiden axialen Spulenschenkeln (21) zwei axial endständige Verbindungsschenkel (23) aufweist, welche jeweils als gebogene Schenkel ausgebildet sind.

6. Spuleneinrichtung (1) nach einem der vorhergehenden Ansprüche, bei welcher das Hohlrohr (3) eine runde Querschnittsform aufweist.

7. Spuleneinrichtung (1) nach einem der vorhergehenden Ansprüche, bei welcher das Hohlrohr (3) einen Innendurchmesser von höchstens 50 mm aufweist.

8. Spuleneinrichtung (1) nach einem der vorhergehenden Ansprüche, bei welcher das Hohlrohr (3) zumindest abschnittsweise einen Biegeradius unterhalb von 100 mm aufweist.

9. Rotor (41) für eine elektrische Maschine mit wenigstens einer Spuleneinrichtung (1) nach einem der vorhergehenden Ansprüche.

10. Rotor (41) nach Anspruch 9, welcher ein Kühlsystem zur Kühlung des supraleitenden Leiters (5) auf eine kryogene Betriebstemperatur aufweist,
wobei das Kühlsystem dazu ausgestaltet ist, ein fluides Kühlmittel im Kühlmittelkanal (7) der Spuleneinrichtung (1) zu zirkulieren.

11. Rotor (41) nach einem der Ansprüche 1 bis 9, welcher zusätzlich einen Rotorkern (31) aufweist, auf welchem die wenigstens eine Spuleneinrichtung (1) mechanisch gehalten wird, wobei der Rotorkern (31) dazu ausgebildet ist, beim Betrieb des Rotors (41) auf einer warmen Betriebstemperatur gehalten zu werden.

12. Rotor (41) nach einem der Ansprüche 9 bis 11, bei welchem der Rotorkern (31) wenigstens eine Nut (43) aufweist, um die Spuleneinrichtung (1) aufzunehmen.

## Claims

1. Electrical coil device (1) of an electric machine, comprising
- a winding carrier which is formed from an elongate hollow tube (3) and which is shaped in the manner of a ring, such that, overall, a superordinate loop of the coil device (1) is formed by the ring shape of the winding carrier,
- and a winding which is applied to the winding carrier and which is composed of a superconductive conductor (5),
- wherein the superconductive conductor (5) is wound in a multiplicity of individual turns (w) helically around the hollow tube (3), such that the ring shape of the winding carrier results in at least one superordinate turn of the overall helix,
- and wherein the interior of the hollow tube (3) is designed as a coolant channel (7) for the circulation of a fluid coolant, wherein the superconductive conductor (5) comprises at least one strip conductor (11) and the thickness of the strip conductor (11) is at most 150 µm.

2. Coil device (1) according to Claim 1, which has a longitudinal axis (A) and which has two axial coil members (21) which extend parallel to the longitudinal axis (A).

3. Coil device (1) according to Claim 2, in which, within the axial coil members (21), the superconductive conductor (5) forms a local angle α of at most 79 degrees with the coil axis (A).

4. Coil device (1) according to Claim 2 or 3, which, in addition to the two axial coil members (21), has two axially end-side connecting members (23) which are each formed as straight members.

5. Coil device (1) according to Claim 2 or 3, which, in addition to the two axial coil members (21), has two axially end-side connecting members (23) which are each formed as bent members.

6. Coil device (1) according to any of the preceding claims, in which the hollow tube (3) has a round cross-sectional shape.

7. Coil device (1) according to any of the preceding claims, in which the hollow tube (3) has an inner diameter of at most 50 mm.

8. Coil device (1) according to any of the preceding claims, in which the hollow tube (3) has, at least in certain portions, a bend radius of less than 100 mm.

9. Rotor (41) for an electric machine, having at least one coil device (1) according to any of the preceding claims.

10. Rotor (41) according to Claim 9, which has a cooling system for cooling the superconductive conductor (5) to a cryogenic operating temperature,
wherein the cooling system is configured to circulate a fluid coolant in the coolant channel (7) of the coil device (1).

11. Rotor (41) according to any of Claims 1 to 9, which additionally has a rotor core (31) on which the at least one coil device (1) is mechanically held, wherein the rotor core (31) is designed to be kept at a warm operating temperature during the operation of the rotor (41).

12. Rotor (41) according to any of Claims 9 to 11, in which the rotor core (31) has at least one groove (43) for receiving the coil device (1).

## Revendications

1. Dispositif (1) de bobine électrique d'une machine électrique, comprenant
- un support d'enroulement, qui est formé d'un tube (3) creux oblong, qui est formé à la manière d'un anneau, de sorte que, dans l'ensemble, il est formé, par la forme annulaire du support d'enroulement, une boucle supérieure hiérarchiquement du dispositif (1) de bobine,
- et un enroulement, monté sur le support de bobine, en un conducteur (5) supraconducteur,
- dans lequel le conducteur (5) supraconducteur est enroulé en une pluralité de spires (w) individuelles de type en hélice autour du tube (3) creux, de sorte que, par la forme annulaire du support d'enroulement, il se crée au moins une spire supérieure hiérarchiquement de toute l'hélice,
- et dans lequel l'intérieur du tube (3) creux est constitué sous la forme d'un conduit (7) pour du fluide de refroidissement pour la circulation d'un fluide de refroidissement,
dans lequel le conducteur (5) supraconducteur comprend au moins un conducteur (11) à ruban et l'épaisseur du conducteur (11) à ruban est de 150 µm au plus.

2. Dispositif (1) de bobine suivant la revendication 1, qui a un axe (A) longitudinal et qui a deux branches (21) axiales de bobine, qui s'étendent parallèlement à l'axe (A) longitudinal.

3. Dispositif (1) de bobine suivant la revendication 2, dans lequel, à l'intérieur des branches (21) axiales de bobine, le conducteur (5) supraconducteur fait, avec l'axe (A) de la bobine, un angle α local de 79 degrés au plus.

4. Dispositif (1) de bobine suivant la revendication 2 ou 3, qui a, supplémentairement aux deux branches (21) axiales de bobine, deux branches (23) de liaison du côté de l'extrémité axialement, qui sont constituées respectivement sous la forme d'une branche droite.

5. Dispositif (1) de bobine suivant la revendication 2 ou 3, qui a, supplémentairement aux deux branches (21) axiales de bobine, deux branches (23) de liaison du côté de l'extrémité axialement, qui sont constituées chacune sous la forme d'une branche incurvée.

6. Dispositif (1) de bobine suivant l'une des revendications précédentes, dans lequel le tube (3) creux a une forme circulaire de la section transversale.

7. Dispositif (1) de bobine suivant l'une des revendications précédentes, dans lequel le tube (3) creux a un diamètre intérieur de 50 mm au plus.

8. Dispositif (1) de bobine suivant l'une des revendications précédentes, dans lequel le tube (3) creux a, au moins par endroits, un rayon de courbure en-dessous de 100 mm.

9. Rotor (41) d'une machine électrique comprenant au moins un dispositif (1) de bobine suivant l'une des revendications précédentes.

10. Rotor (41) suivant la revendication 9, qui a un système de refroidissement pour le refroidissement du conducteur (5) supraconducteur à une température de fonctionnement cryogénique, dans lequel le système de refroidissement est conformé pour mettre un agent de refroidissement fluide en circulation dans le conduit (7) de fluide de refroidissement du dispositif (1) de bobine.

11. Rotor (41) suivant l'une des revendications 1 à 9, qui a, supplémentairement un noyau (31) de rotor, auquel le au moins un dispositif (1) de bobine est retenu mécaniquement, dans lequel le noyau (31) de rotor est constitué pour être maintenu à une température de fonctionnement chaude pendant le fonctionnement du rotor (41).

12. Rotor (41) suivant l'une des revendications 9 à 11, dans lequel le noyau (31) du rotor a au moins une rainure (43), pour recevoir le dispositif (1) de bobine.
